# EUROPEAN PATENT APPLICATION

(11) **EP 4 592 904 A1**
(43) Date of publication of application: **30.07.2025**
(21) Application number: 25150501.2
(22) Date of filing: 07.01.2025
(51) Int. Cl.: G06N 3/096, G06N 3/045, G06N 3/09, G06V 10/82, G01S 7/41, G01S 7/48, G01S 13/86, G01S 17/89

(54) **OBJECTION DETECTION ENCODER TRAINING USING FOUNDATION MODELS**

(30) Priority: 05.01.2024 US 202418405514
(71) Applicant: Robert Bosch GmbH, 70469 Stuttgart (DE)
(72) Inventor: Rambach, Kilian, 70567 Stuttgart (DE); Semedo, João, Pittsburgh, 15206 (US); Chen, Bingqing, Pittsburgh, 15219 (US); Pereira, Marcus, Pittsburgh, 15222 (US); Lin, Wan-Yi, Wexford, 15090 (US); Domokos, Csaba, 75399 Simmozheim (DE); Feldman, Yuri, 3950602 Tirat Carmel (IL); Pushkareva, Mariia, 3473805 Haifa (IL)
(74) Representative: Isarpatent

(57) **Abstract**

A method and system for training a target neural network using a foundation model having a source neural network that has been pre-trained to operate on a source modality. Inputting source data to the foundation model. The source neural network of the foundation model having at least one source encoder having a source weights which has been pre-trained to compute source features which are computable within the source data of the source modality. Inputting target data to a target neural network operating on a target modality. The target neural network including at least one target encoder having target weights for computing target features within the target data of the target modality. Training the target weight by pairing the target data with the source data and freezing the source weights of the source neural network for a pre-determined epoch.

## Description

### TECHNICAL FIELD

The following relates generally to a system and method of training a target modality for a first sensor system using a foundation model previously trained to a source modality for a second sensor system.

### BACKGROUND

Generally, driver assistance systems and/or autonomous driving vehicles may require precise representations of the environment in which they operate. To assist in providing these representations, these systems or vehicles may employ different sensor modalities that could include a camera, lidar, radar, or ultrasound sensor. To build the representation of the environment using one or more of these sensor modalities, an object detection algorithm may be employed in which all objects around the vehicle are detected and the object's precise location, size, and classification (e.g., car, pedestrian, etc.) are determined. Or the representation may be generated using instance segmentation that detects and delineates a distinct instance of an object based on one or several modalities used, e.g., radar or camera.

Modern machine learning algorithms may also be trained in a supervised way to perform object detection and segmentation using a labeled dataset. But collecting large datasets to train such algorithms requires extensive manpower, resources, and cost. Moreover, for some sensor modalities (e.g. radar) such datasets may not exist or maybe limited in size in comparison to datasets for other sensor modalities.

### SUMMARY

A system and method for training a target neural network that may use a foundation model having a source neural network that has been pre-trained to operate on a source modality. The system and method being operable to input source data to the foundation model. The source neural network of the foundation model may have at least one source encoder having one or more source weights which have been pre-trained to detect a source feature that is detectable within the source data of the source modality. Target data may be inputted to a target neural network operating on a target modality. The target neural network may include at least one target encoder having one or more target weights for computing one or more target features within the target data of the target modality. The one or more target weights may be trained by pairing the target data with the source data and freezing the one or more source weights of the source neural network for a pre-determined epoch. Lastly, the source neural network is pre-trained for operating on the source modality using the source data to detect one or more objects. The source data may also include text or image data.

It is also contemplated the target data may comprise radar data received from a radar sensor. The image data may also be paired with the radar data (e.g., spectral radar data or radar point cloud data). Or the target data may comprise Lidar data from a Lidar sensor. It is also contemplated the target neural network may comprise a transformer based neural network or a convolutional neural network.

The target modality may also be operable to detect several objects within an input frame of the target data. The source encoder may also include an image encoder and a text encoder, the at least one target encoder may include a radar encoder. It is also contemplated that only the target weight of the radar encoder may be trained during the pre-determined epoch. Or a first source weight of the image encoder and the target weight of the radar encoder may be trained after the pre-determined epoch.

A second source weight of the text encoder may remain unchanged after the pre-determined epoch. The at least one source encoder may also include an image encoder and a text encoder. The target encoder may include a radar encoder. Lastly, the target weight of the radar encoder may be trained during the pre-determined epoch. Also, a first source weight of the image encoder, a second source weight of the text encoder, and the target weight of the image encoder may be trained after the pre-determined epoch.

It is also contemplated the system and method may learn a feature embedding of the foundation model and classify the object using the target data. The object may also be classified according to a multiclass classification. A new classification for the object within the multiclass classification may be generated using a text embedding corresponding to one or more hierarchy levels within the multiclass classification.

One or more feature embeddings from the source encoder and the target encoder for one or more objects detected within the source data and the target data may also be generated. Also, one or more regression parameters for a predicted bounding boxes for the one or more objects detected may be generated. A loss value for the one or more feature embeddings and the one or more regression parameters may be combined using a bipartite matching loss function. A loss value for the one or more regression parameters of the predicted bounding boxes may be computed as an Lₚ norm. A loss value may be computed using a mean square error loss function or a cosine-similarity loss function.

### BRIEF DESCRIPTION OF THE DRAWINGS

Figure 1 depicts an exemplary computing system.
Figure 2 illustrates a block diagram of a foundation model for a vision system that may be operable to perform object detection.
Figure 3 is a block flow diagram illustrating how a target modality may be encoded using a foundation model that includes a source modality.
Figure 4 illustrates a computing system controlling an at least partially autonomous robot.
Figure 5 is an embodiment in which a computer system may be used to control an automated personal assistant.
Figure 6 is an embodiment in which the computing system may be used to control an access control system or surveillance system.
Figure 7 is an example of a hierarchical diagram for a multiclass classification of an object that may belong to several classes.

### DETAILED DESCRIPTION

Embodiments of the present disclosure are described herein. It is to be understood, however, that the disclosed embodiments are merely examples and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present embodiments. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

As mentioned previously, machine learning algorithms may be trained in a supervised way to handle object detection and instance segmentation tasks using one or more labeled datasets. But collecting large dataset is both difficult and costly. Moreover, for some sensor modalities like radar, large datasets may not exist.

But it is understood that foundation models do exist which have been trained on a substantially large amounts of data, e.g., image and text data. It is generally understood that a foundation model may be a deep learning algorithm pre-trained with extremely large datasets. Foundation models may be trained with a wide variety of data and can transfer knowledge from one task to another. It is also understood foundation models may be expensive to develop due to the extensive number of parameters that have been trained and data required. For instance, CLIP (Contrastive Language-Image Pre-Training) is a neural network trained on a variety of (image, text) pairs. Foundation models, like CLIP, are generally understood to provide good operating performance and generalization.

It is contemplated the knowledge already existing in foundation models, like CLIP, may be transferred to a new model working on a different modality, e.g., Lidar or radar. Stated differently, a modality (i.e., Lidar encoder) may be trained using a different foundation model (e.g., the CLIP model trained for camera systems) using unlabeled image-lidar data pairs. As such, no labels for the modality being trained (i.e., Lidar or radar) may be necessary.

Prior approaches may be capable of using the foundation model for one modality (i.e., object detection) to encode an entire input frame for a different modality (i.e., Lidar). But such prior systems were limited because the foundation model may have only been trained to encode the whole input frame without the knowledge of, for example, the position of different objects in the measurement. It is therefore contemplated the present system and method is intended to overcome such limitations.

For instance, the present system and method contemplates a foundation model that has been trained and applied to a given modality, e.g., a vision system. This foundation model may then be applied to train an encoder of a different modality, e.g., radar. For instance, the radar encoder may receive radar data as input. Such data may include radar point clouds or radar spectra. The radar encoder may then compute a feature embedding of the radar data. In this way, the information content of the vision foundation model may be used and leveraged to train the radar encoder.

The disclosed system and method can therefore use a foundation model designed and trained for one type of modality (e.g., the object detection foundation model OWL-ViT (Vision Transformer for Open-World Localization)) to train the encoder of a different modality (e.g., radar, Lidar, etc.). In this way the trained encoder can learn feature embeddings for the different objects in a frame instead of a feature embedding of the whole input frame. The trained encoder may therefore be used for tasks like object detection and instance segmentation.

In addition, box proposals for object detection are learned from the foundation model, i.e., every box indicates the position of a detected object. Regression parameters, e.g., size of a box (length, width, height) and orientation angle of the detected object may also be learned from the foundation model.

Stated differently, the contemplated system and method may employ a foundation model from another modality (e.g., vision) to train an encoder of a different modality (e.g., radar). The radar encoder may therefore receive radar data as input (e.g., radar point clouds or radar spectra) and the system and method may be operable to compute a feature embedding of the radar data. In this way, the information content of the vision foundation model may be used and leveraged to train the radar encoder.

It is also contemplated that box proposals for object detection may be learned from the foundation model, i.e., every box indicates the position of a detected object. Moreover, regression parameters, e.g., size of a box (length, width, height), and orientation angle of the detected object, can be learned from the foundation model.

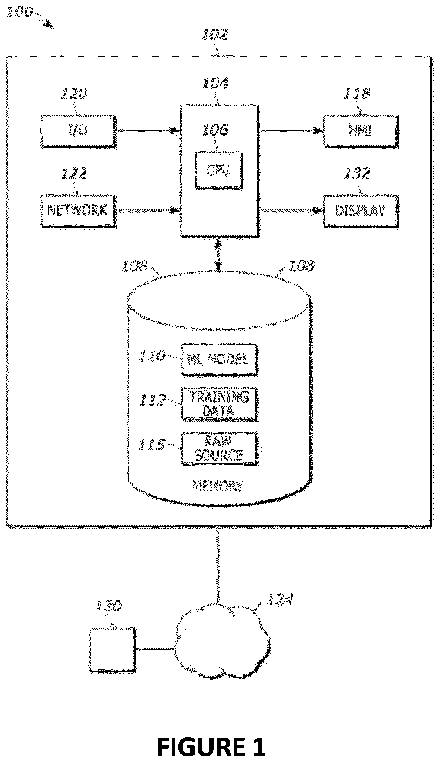

Figure 1 illustrates an exemplary system 100 that may be used for training a given encoder using one or more foundation models. The system 100 may include at least one computing device 102. The computing system 102 may include at least one processor 104 that is operatively connected to a memory unit 108. The processor 104 may be one or more integrated circuits that implement the functionality of a central processing unit (CPU) 106. Alternatively, the processor 104 may be designed to implement the functionality of a graphic processing unit (GPU). The CPU 106 may be a commercially available processing unit that implements an instruction stet such as one of the x86, ARM, Power, or MIPS instruction set families.

During operation, the CPU 106 may execute stored program instructions that are retrieved from the memory unit 108. The stored program instructions may include software that controls operation of the CPU 106 to perform the operation described herein. In some examples, the processor 104 may be a system on a chip (SoC) that integrates functionality of the CPU 106, the memory unit 108, a network interface, and input/output interfaces into a single integrated device. The computing system 102 may implement an operating system for managing various aspects of the operation.

The memory unit 108 may include volatile memory and non-volatile memory for storing instructions and data. The non-volatile memory may include solid-state memories, such as NAND flash memory, magnetic and optical storage media, or any other suitable data storage device that retains data when the computing system 102 is deactivated or loses electrical power. The volatile memory may include static and dynamic random-access memory (RAM) that stores program instructions and data. For example, the memory unit 108 may store a machine-learning model 110 or algorithm, training dataset 112 for the machine-learning model 110, and/or raw source data 115.

The computing system 102 may include a network interface device 122 that is configured to provide communication with external systems and devices. For example, the network interface device 122 may include a wired and/or wireless Ethernet interface as defined by Institute of Electrical and Electronics Engineers (IEEE) 802.11 family of standards. The network interface device 122 may include a cellular communication interface for communicating with a cellular network (e.g., 3G, 4G, 5G). The network interface device 122 may be further configured to provide a communication interface to an external network 124 or cloud.

The external network 124 may be referred to as the world-wide web or the Internet. The external network 124 may establish a standard communication protocol between computing devices. The external network 124 may allow information and data to be easily exchanged between computing devices and networks. One or more servers 130 may be in communication with the external network 124.

The computing system 102 may include an input/output (I/O) interface 120 that may be configured to provide digital and/or analog inputs and outputs. The I/O interface 120 may include additional serial interfaces for communicating with external devices. For instance, the I/O interface 120 may be configured to receive data from sensors that provide sensed signals. The sensors employed may include video (camera or vision systems), radar, LiDAR, ultrasonic, motion, or thermal sensor that provides sensed signals relating to digital images. Or the sensors may be radar or LIDAR that provide sensed signals relating to digital point cloud data.

The sensor systems may be used by system 100 to classify the sensor data and detect the presence of objects in the sensor data or perform a semantic segmentation on the sensor data or a free space estimation. For instance, system 100 may use the sensed data to detect objects like traffic signs, pedestrians, vehicles or other objects which may appear when a vehicle is being operated in a real-world environment. It is contemplated system 100 may operate to carry out such functions based on low-level features like edges, point-cloud data, or pixel attributes within a digital image or digital point cloud data.

The computing system 102 may include a human-machine interface (HMI) device 118 that may include any device that enables the system 100 to receive control input. Examples of input devices may include human interface inputs such as keyboards, mice, touchscreens, voice input devices, and other similar devices. The computing system 102 may include a display device 132. The computing system 102 may include hardware and software for outputting graphics and text information to the display device 132. The display device 132 may include an electronic display screen, projector, printer or other suitable device for displaying information to a user or operator. The computing system 102 may be further configured to allow interaction with remote HMI and remote display devices via the network interface device 122.

The system 100 may be implemented using one or multiple computing systems. While the example depicts a single computing system 102 that implements all of the described features, it is intended that various features and functions may be separated and implemented by multiple computing units in communication with one another. The particular system architecture selected may depend on a variety of factors.

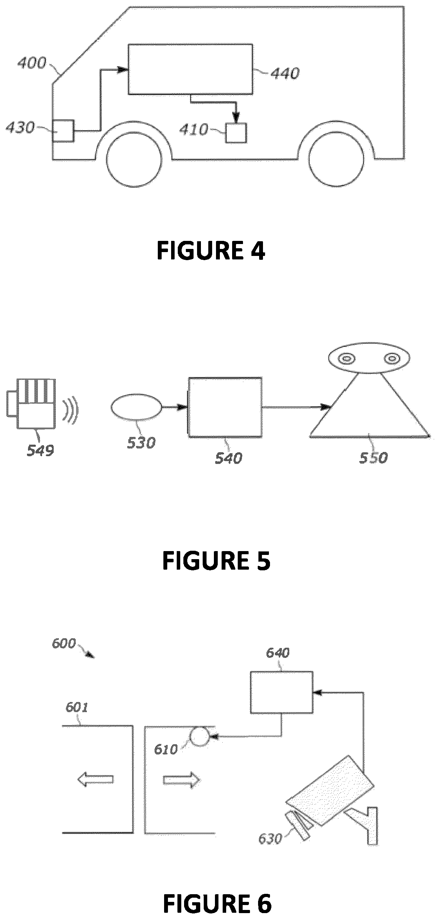

The system 100 may implement a machine-learning algorithm 110 that is configured to analyze the raw source data 115 (or dataset). The raw source data 115 may include raw or unprocessed sensor data that may be representative of an input dataset for a machine-learning system. The raw source data 115 may include video, video segments, images, and raw or partially processed sensor data (e.g., data from digital camera or LiDAR sensor). In some examples, the machine-learning algorithm 110 may be a neural network algorithm (i.e., CNN or DNN) that may be designed to perform a predetermined function. For instance, the neural network may be employed in conjunction with the embodiments described in Figures 4-6 below.

The system 100 may store a training dataset 112 for the machine-learning algorithm 110. The training dataset 112 may represent a set of previously constructed data for training the machine-learning algorithm 110. This training dataset 112 may be the data for a given encoder that was trained using the foundation model.

The training dataset 112 may be used by a machine-learning algorithm 110 to learn weighting factors associated with a neural network algorithm. The training dataset 112 may include a set of source data that has corresponding outcomes or results that the machine-learning algorithm 110 tries to duplicate via the learning process. For instance, the training dataset 112 may include source images and depth maps from various scenarios in which objects (e.g., pedestrians) may be identified.

As stated above, system 100 may be used to receive and analyzed data received from different sensor modalities. A first modality can be the "source modality" which may be the modality from which the foundation model may be used. A second modality may be representative of the "target modality" that may be used to learn an encoder.

A vision and/or camera sensor may be used as a source modality and a radar sensor may be used as a target modality. The source modality may include a foundation model which may be stored in memory 108. Or the foundation model may be received by computing system 102 by other means, such as external network 124. It is contemplated the source modality may be the language modality used to train a foundation model. As such, a vision foundation model like "OWL-ViT" that has been trained for a vision/camera system may be used to train a target encoder (e.g., radar or LiDAR).

But it is contemplated the source modality and target modality are not limited to the above example. For instance, a vision/camera system may be the "source modality" and a radar/Lidar may not be the "target modality." Instead, it is contemplated the source and target modalities can be the same or different modality types. For example, a radar encoder for a first radar sensor could be trained using a radar foundation model that has been previously trained with a second (and different) radar sensor. So while examples may be used in which a vision/camera system is used as the source modality and Lidar/radar are used as the target modality such examples are not limiting.

It is also contemplated the learned encoder (e.g., radar) may be used for different downstream tasks. Such tasks may include object detection or instance segmentation. The learned encoder may also be combined with one or more separate object detection networks. For instance, the embedded features of a radar encoder could be added as additional features to a grid representation like that used within an object detection network. It is contemplated the addition of the radar encoder would improve the performance of the object detection network (e.g., improved generalization). Lastly, it is contemplated when used within system 100, the trained radar encoder could be used in a fusion algorithm, to fuse the data of different sensor modalities (e.g., Video, Radar, Lidar) to predict detected objects using the information of all of those modalities. Again, the present method and system may use a foundation model trained on a given source modality. The source modality could be a vision system (e.g., camera) which is operable to perform object detection.

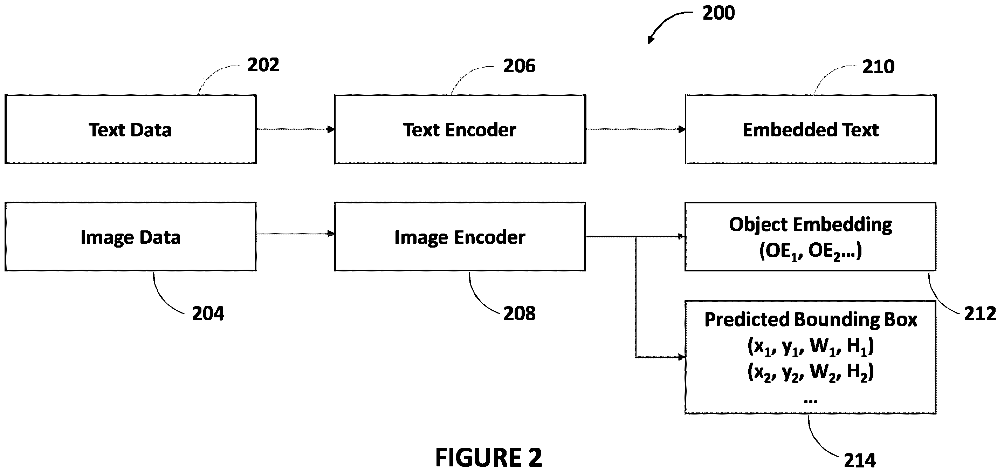

For instance, Figure 2 is a block diagram illustration of a foundation model 200 for a vision system that may be operable to perform object detection. It is contemplated model 200 may be employed using system 100. As shown, model 200 may include both a text encoder 206 and an image encoder 208. It is contemplated the encoders may be responsible for transforming raw input data (e.g., text data 202 and image data 204) into a compact, latent representation. This latent space representation may be used to detect features within the image - i.e., detecting an object.

More specifically, text encoder 206 may receive a text string (i.e., query) as an input and the text encoder 206 may output a text embedding 210. With regards to the image encoder 208, the source modality may be operable to output feature/object embeddings 212 for one or more objects in the input data frame (e.g., the image) and it may also output one or more corresponding predicted bounding boxes 214. As shown by Figure 2, the bounding boxes 214 may comprise parameters like "x," "y," "width," and "height" where "x"/"y" are the Cartesian positions of an object within the image data and "width"/"height" is the size of the bounding box. Depending on the application, the bounding box parameters can be extended by other parameters. For instance, a third Cartesian component may be used, a yaw angle of an object may be used, or various parameters may be chosen differently.

Again, the foundation model (like model 200) may be used as the source modality to train a given target modality like a radar sensor. But it is contemplated that to train a given encoder like radar, a dataset of paired image-radar samples may be necessary.

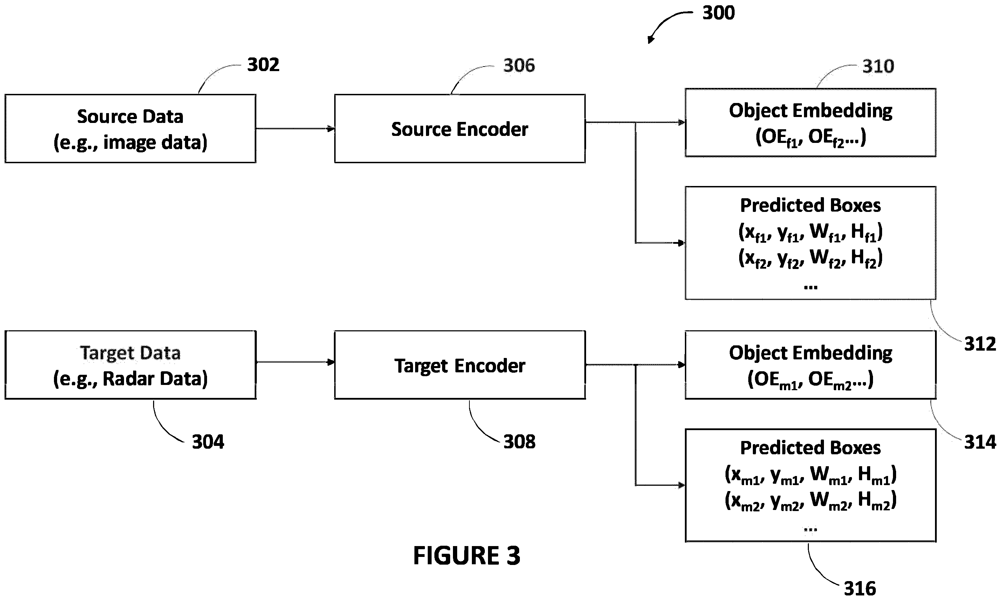

For instance, Figure 3 is a block flow diagram 300 illustrating how a target modality (e.g., radar) may be encoded using a foundation model like that illustrated in Figure 2. It is contemplated diagram 300 may be employed using system 100. It is understood target encoder 308, e.g., a radar encoder, may include varying forms of architectures. For instance, an object detection network for radar data may comprise either a grid renderer and a CNN or a transformer-based architecture. The output of the target encoder 308 (after a possible additional transformation) should include the same structure as the source encoder 306, i.e., the image encoder. In diagram 300, target data 304 is provided as the input to the target encoder 308 much in the same way as that described with reference to Figure 2. For instance, spectral radar data may be used as the target data 304 which is inputted to the target encoder 308. Depending on the type of data input, varying CNNs or transformer-based architectures may be possible.

It is also contemplated that different methods may be employed to train a given target encoder 308 like a radar encoder. For instance, if a vision foundation model is employed, the weights of the image and text encoder may be frozen. Then if a radar sensor is being trained using the vision foundation model, the weights of the radar encoder network may then be trained.

Alternatively, for a vision foundation model, the weights of the image and text encoder may be frozen for part of the training. For instance, it is contemplated the image and text encoder may be frozen for a first N epoch of the training procedure. During the time the image and text encoder are frozen, the weights of the radar encoder may be updated. Then, after N epochs of training, both the weights of the image and radar encoder may be trained together while the weights of the text encoder are frozen. As such it is possible to adapt the given encoder, e.g., image encoder, to the data being used, e.g., image data.

Also, it is contemplated that both the foundation and modality encoders (i.e., image and radar encoder) may be fine-tuned to the dataset at hand. During this process, an additional loss can be used to keep the image encoder aligned with the frozen encoder (text encoder) using additional data (image-text data). As an alternative, the various encoders (i.e., image, radar, and text encoders) can be trained together after N epochs. If trained together, it is contemplated various pairing or sampling may be necessary. For instance, using a vision foundation model to train a radar, it is contemplated image-radar and image-text pairs or image-radar-text data samples may be required. While Figure 3 was described particularly with respect to the foundation model being a vision system and target modality being radar, the various training methods described may be employed regardless of the foundation model and modality being trained.

It is also contemplated that various training losses may occur with the disclosed systems and methods. It is therefore envisioned that these different kinds of losses can be used to train the radar encoder. For instance, the source encoder 306 (image encoder) and the target encoder 308 (radar encoder) may output the feature embeddings 310 and 314 for detected objects and the regression parameters of the predicted bounding boxes 312 and 316.

It is further contemplated the loss between the features embeddings 310, 314 of the source encoder 306 (image encoder) and the target encoder 308 (radar encoder) may provide different losses which can be used. For instance, the different losses may include the mean square error (MSE) loss or the cosine-similarity loss.

As another alternative, the contemplated loss may be combined with a contrastive learning loss. For instance, the feature embeddings 310, 314 of the source encoder 306 and target encoder 308 (i.e., radar and image encoders) of the object under consideration may be similar. But the feature embeddings 314 of the target encoder 308 should be different with respect to object embeddings 310, 314 (e.g., radar and/or image feature embeddings) of other object types in the same or other data input frames.

It is further contemplated the flow diagram 300 may be employed based on loss for regression parameters. For instance, loss of the regression parameters of the predicted boxes may be computed as an Lₚ norm. Such an Lₚ norm may include a L₂ or L₁-norm.

Or the flow diagram 300 may be employed based on adaptation of the loss computation. Regarding the losses discussed above, the order of the detected objects of the image in the target encoder 308 (e.g., radar encoder) should be the same. For instance, if an image encoder is used, source encoder 306 may compute features (e.g., car, pedestrian, bike) and the target encoder 308 (if a radar encoder) may compute the features (car, pedestrian, bike) in the same order. In other words, the modality encoder would not compute the features in a different order than source encoder 306 - i.e., it would not compute features as (pedestrian, car, bike). Flow diagram 300 may be operable to handle such operations by combining the losses of the feature embeddings 310 or 314 and the regression parameters with a bipartite matching loss. The bipartite matching loss may be designed to query for the objects of the encoders 306, 308 (i.e., image and radar encoder) which may be most similar after the loss is evaluated. In this way, it is contemplated that the order of the predicted objects may not be as critical.

It is also contemplated that training a target modality from a source modality using a foundation model may be used in various applications. For instance, the trained encoder (e.g., radar encoder) can be used for object detection. The trained encoder could be operable to detect one or more objects in an input frame (e.g., radar point cloud data). Alternatively, the trained encoder could be used for instance segmentation where it is operable to identify and separate individual objects within an input frame. Another application is free space estimation, where the trained encoder is used to estimate the free, i.e. unoccupied space, e.g., in an automotive application.

The disclosed system and method could be employed where unlabeled datasets or small labeled datasets may be necessary. For instance, in contrast to a fully supervised training of object detection networks, the present system and method may not require labeled data for training purposes. As discussed with reference to Figure 3, foundation model 300 may be a vision foundation model and target encoder 308 may be a radar encoder. In this example, it is contemplated the dataset may only require image-radar-pairs. In other words, no additional labels may be necessary and text descriptions of the data samples may also not be necessary. As such, a smaller labeled dataset can be used in addition for fine-tuning of the learned radar encoder (i.e., encoder 308) or an additional network head may be employed for the downstream task. Since labeling of a large radar dataset can be omitted the time consuming and costly may be significantly reduced which may be significantly advantageous. Also, training a radar foundation model from scratch would require a huge radar-text dataset which is usually not available or very time and cost intensive to get. The disclosed system and method may therefore be advantageous because the knowledge of a foundation model can be transferred to a radar model, without requiring a radar-text dataset.

It is also contemplated that foundation models are generally trained on a huge amount of data and therefore provide good generalization capabilities. By training target encoder 308 (e.g., radar encoder) using such a foundation model (e.g., foundation model 302), the trained encoder can also provide better generalization capabilities compared to a network trained on a smaller labeled dataset in a supervised way.

The trained encoder (i.e., encoder 308) is therefore operable to generalize better to objects not seen in the training data or to objects which look differently to the ones seen in the training data. For instance, an object like a small car and big car may have been seen in training, but a middle-sized car may not have been seen but could appear in the testing data or in the real-world application. Another example would include generalization to data from different locations. For instance, the network may be trained on data collected in a given geographical location (e.g., Europe) but the network disclosed by the proposed system and method would now be operable to generalize to the data measured in a different geographical location (e.g., Asia).

The disclosed system and method may also be applicable to multiclass classification. For instance, during object detection it is understood the detected objects should also be classified. Such multiclass classification would include classifying an object of a car or pedestrian. In many applications there may be an object hierarchy.

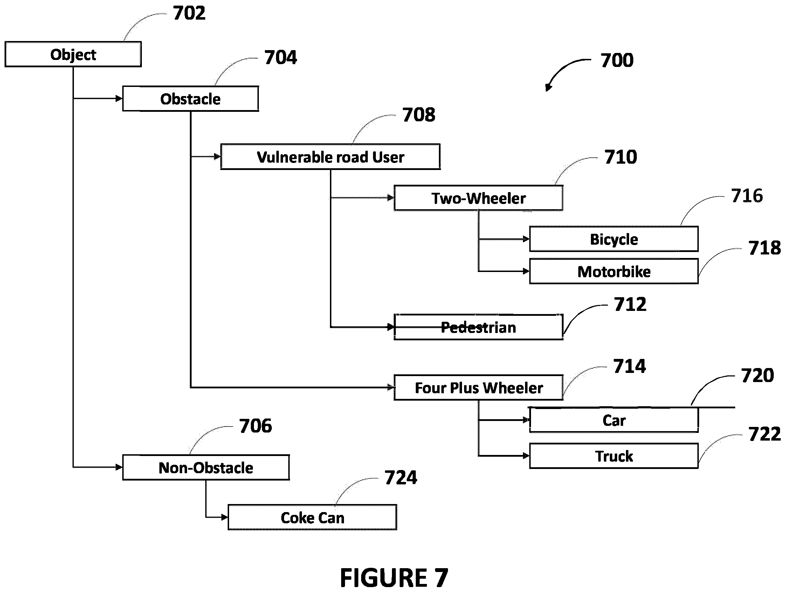

Figure 7 illustrates a hierarchical diagram 700 for a multiclass classification of an object 702 that may belong to several classes (e.g., obstacle 704 and non-obstacle 706). A classification algorithm would be operable to provide a good performance in assigning object 702 to all the classes of the hierarchy 700 to which it may belong. Such classification algorithm may be operable to assign a car to the class car 720, four_plus_wheeler 714, obstacle 704, and object 702.

But it is understood that classification algorithms trained in a supervised way with class labels (e.g., 720, 714, 704) may struggle with a good multiclass classification. The proposed system and method is therefore operable to provide improved multiclass classification performance by learning feature embeddings of the foundation model. The proposed system and method may also employ text embeddings corresponding to the different hierarchy levels so as to predict probabilities for leaves in the hierarchy for each detected object.

The present system and method may also be operable to provide fine-grained classifications. It is understood networks trained in a supervised way may only be operable to classify objects up to the level provided in the labeled dataset. For example, with reference to Figure 7, if the dataset provides labels for the class two wheeler 710 but not for the classes bicycle 716 nor motorbike 718, it may not be possible for the network to classify objects as "bicycle" during inference. The proposed system and method may therefore be operable to provide a better fine-grained classification by learning the feature embeddings from a foundation model, which has been trained on a huge dataset containing a very large number of different object types.

The present system and method may also be operable to provide classification of objects not seen in recorded data. In other words, with the contemplated system and method a target target encoder 308 (e.g., radar encoder) may be trained with a particular dataset like "image radar pairs." As such, the dataset may include different types of objects like a bicycle and a motorbike. The proposed method can therefore be operable to classify objects not seen in the recorded data at all, by making use of the learned feature embeddings. For instance, with reference to Figure 4, objects of type bicycle 716 and motorbike 718 may exist within the training data, but the disclosed system and method may be operable to further use the classification of "trike" which does not exist in the training data.

It is also contemplated that the present system and method may be operable to perform object detection on downstream applications. For instance, the network of the present system and method is operable to detect objects in an input frame (e.g., radar input frame), predict the bounding boxes for the detected objects, and then the present system and method is operable to classify the detected objects.

For instance, with reference to Figure 4, an object type could be detected (e.g., car 420, pedestrian 412, bicycle 416) and a text query (e.g., the word "car", or "picture of a car") may then be fed into the text encoder (e.g., encoder 206) of the foundation model (e.g., model 200) to compute a feature embedding (e.g., embedding 212) of this object type. In this example, the feature embedding of the text encoder 206 and the radar encoder (i.e., target encoder 308) may then be compared. This comparison may be done using mean square error (MSE) or cosine similarity. If the value being compared is above a predefined threshold, the type of object is detected. A contemplated advantage of this approach to object classification is that no additional labeled radar data may be necessary. Instead, if additional labeled radar data is available, this data can be used to fine-tune the radar and text encoder in a supervised training. The supervised training can be performed using cross entropy or focal sigmoid cross-entropy losses. Lastly, it is contemplated that query embeddings may allow easily for multiclass classification, fine-grained classification, classification of objects not seen in recorded data as previously discussed.

The present system and method may also be operable to fine tune an object detection network on labeled data. For instance, a labeled radar dataset (i.e., dataset 304) may be used to fine-tune the radar encoder (i.e., target encoder 308). An additional neural network head may be attached to the radar encoder to improve the network predictions and to have the desired output format. The radar encoder may be attached in a few linear layers, or different heads for different kind of object types. Also, the desired output format may be a grid in which each grid value corresponds to the probability of a certain object type.

A small, labeled radar dataset may be necessary since the radar encoder has already been trained and the labeled dataset is used for fine-tuning. The network may also be fine-tuned in a supervised manner like using the ground truth labels and regression parameters. During inference, an object may be considered detected if the corresponding output of the network increases a predefined threshold.

Again, the present system and method may be operable as fine tune object detection network on the source labeled data (e.g., labeled image) and target data (e.g., radar data). The labeled dataset, which may include the source labeled data (image data) and the target data (radar data) can be used to fine-tune the target object detection network (i.e., radar network) as described above with regards to Figure 3. Again, Figure 3 illustrates a radar network (304, 308, 314, 316) in parallel to an image-based object detection network (i.e., 302, 306, 310, 312) which uses the image encoder (i.e., source encoder 306). It is therefore contemplated the radar and image encoder (i.e., encoders 306 and 308) may be adapted to the specific dataset at hand providing an improved target encoder 308 (i.e., radar encoder). The trained target encoder 308 (radar encoder) can be used in a system where the data of different sensor modalities (e.g., Video, Radar, Lidar) may be fused to predict detected objects using the information of all those modalities.

With regards to data base retrieval, it is contemplated the trained target encoder 308 (radar encoder) can be used to find data samples (e.g., radar data samples) which may include a certain object or include a certain scenario. Therefore, a text prompt may be input to the text encoder (such as "car with caravan") to compute the embedded feature vector. For all data samples in the dataset, the feature vector may be compared to the feature vectors computed by the target encoder 308. Again, these computations may be done using MSE or cosine similarity. The samples which match best may be selected as the relevant radar samples. It is contemplated the match may be a comparison based on a predefined threshold.

It is also contemplated that for instance segmentation, for each frame (i.e., radar frame) the objects may be detected and all the reflections (radar points of the point cloud) which belong to a certain object may be semantically annotated. In the example of radar spectra, all bins in the radar spectra which belong to a certain object may be semantically annotated. This form of instance segmentation may be an extension to the object detection methodology described above. But an extra neural network head may be added to the target encoder 308 (radar encoder) to output the detected objects including the annotated radar points. This head may be trained and fine-tuned together with the radar encoder using a labeled radar dataset. Since the radar encoder may already be trained, a smaller labeled radar dataset is sufficient opposed to a fully supervised training. Lastly, with regard to auto-labelling, it is contemplated the trained target encoder 308 (i.e., radar encoder) may be used to automatically compute labels of a new dataset. This new dataset can later be used for supervised training of another neural network.

Figures 4-6 illustrate various embodiments of how the disclosed system and method may be deployed. For instance, Figure 4 illustrates an embodiment in which a computing system 440 may be used to control an at least partially autonomous robot, e.g., an at least partially autonomous vehicle 400. The computing system 440 may be like the system 100 described in Figure 1. Sensor 430 may comprise one or more video/camera sensors and/or one or more radar sensors and/or one or more ultrasonic sensors and/or one or more LiDAR sensors and/or one or more position sensors (like e.g., GPS). Some or all these sensors are preferable but not necessarily integrated in vehicle 400.

Alternatively, sensor 430 may comprise an information system for determining a state of the actuator system. The sensor 430 may collect sensor data or other information to be used by the computing system 440. One example for such an information system is a weather information system which determines a present or future state of the weather in environment. For example, using input signal x, the classifier may for example detect objects in the vicinity of the at least partially autonomous robot. Output signal y may comprise an information which characterizes where objects are located in the vicinity of the at least partially autonomous robot. Control command A may then be determined in accordance with this information, for example to avoid collisions with said detected objects.

Actuator 410, which may be integrated in vehicle 400, may be given by a brake, a propulsion system, an engine, a drivetrain, or a steering of vehicle 400. Actuator control commands may be determined such that actuator (or actuators) 410 is/are controlled such that vehicle 400 avoids collisions with said detected objects. Detected objects may also be classified according to what the classifier deems them most likely to be, e.g. pedestrians or trees, and actuator control commands A may be determined depending on the classification.

Shown in Figure 5 is an embodiment in which computer system 540 is used for controlling an automated personal assistant 550. Sensor 530 may be an optic sensor, e.g. for receiving video images of a gestures of user 549. Alternatively, sensor 530 may also be an audio sensor e.g. for receiving a voice command of user 549.

Control system 540 then determines actuator control commands A for controlling the automated personal assistant 550. The actuator control commands A are determined in accordance with sensor signal S of sensor 530. Sensor signal S is transmitted to the control system 540. For example, classifier may be configured to e.g., carry out a gesture recognition algorithm to identify a gesture made by user 549. Control system 540 may then determine an actuator control command A for transmission to the automated personal assistant 550. It then transmits said actuator control command A to the automated personal assistant 550.

For example, actuator control command A may be determined in accordance with the identified user gesture recognized by classifier. It may then comprise information that causes the automated personal assistant 550 to retrieve information from a database and output this retrieved information in a form suitable for reception by user 549.

In further embodiments, it may be envisioned that instead of the automated personal assistant 550, control system 540 controls a domestic appliance (not shown) controlled in accordance with the identified user gesture. The domestic appliance may be a washing machine, a stove, an oven, a microwave or a dishwasher.

Shown in Figure 6 is an embodiment in which computing system controls system 600. It is contemplated that system 600 may be an access control system or a surveillance system. For instance, system 600 may be designed to physically control access to a door 601. Sensor 630 is configured to detect a scene that is relevant for deciding whether access is to be granted or not. The sensor 630 may collect image data or video data related to the scene. It may for example be an optical sensor for providing image or video data, for detecting a person's face. Classifier may be configured to interpret this image or video data e.g. by matching identities with known people stored in a database, thereby determining an identity of the person. Actuator control signal A may then be determined depending on the interpretation of classifier, e.g. in accordance with the determined identity. Actuator 610 may be a lock which grants access or not depending on actuator control signal A. A non-physical, logical access control is also possible.

When deployed within a surveillance system, system 600, sensor 630 may be configured to detect a scene that is under surveillance. The sensor 630 may collect image data or video data related to the scene. The computing system 600 may not necessarily operate to control an actuator 610 but may be instead designed to control a display (not shown). For example, the machine learning system may determine a classification of a scene, e.g. whether the scene detected by optical sensor 630 is suspicious. Actuator control signal A which is transmitted to the display may then e.g., be configured to cause the display to adjust the displayed content dependent on the determined classification, e.g., to highlight an object that is deemed suspicious by machine learning system.

Except in the examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. Also, unless expressly stated to the contrary: percent, "parts of," and ratio values are by weight; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "substantially," "generally," or "about" means that the amount or value in question may be the specific value designated or some other value in its neighborhood. Generally, the term "about" denoting a certain value is intended to denote a range within +/- 5% of the value. As one example, the phrase "about 100" denotes a range of 100+/- 5, *i.e.* the range from 95 to 105. Generally, when the term "about" is used, it can be expected that similar results or effects according to the invention can be obtained within a range of +/- 5% of the indicated value. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1-10 explicitly includes 1, 2, 3, 4, 5, 6, 7, 8, 9, and 10. Similarly, the range 1 to 100 includes 1, 2, 3, 4, .... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits. Similarly, whenever listing integers are provided herein, it should also be appreciated that the listing of integers explicitly includes ranges of any two integers within the listing.

As used herein, the term "and/or" means that either all or only one of the elements of said group may be present. For example, "A and/or B" means "only A, or only B, or both A and B". In the case of "only A", the term also covers the possibility that B is absent, *i.e.* "only A, but not B". It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

The term "comprising" is synonymous with "including," "having," "containing," or "characterized by." These terms are inclusive and open-ended and do not exclude additional, unrecited elements or method steps. The phrase "consisting of" excludes any element, step, or ingredient not specified in the claim. When this phrase appears in a clause of the body of a claim, rather than immediately following the preamble, it limits only the element set forth in that clause; other elements are not excluded from the claim as a whole. The phrase "consisting essentially of" limits the scope of a claim to the specified materials or steps, plus those that do not materially affect the basic and novel characteristic(s) of the claimed subject matter. The term "one or more" means "at least one" and the term "at least one" means "one or more." The terms "one or more" and "at least one" include "plurality" as a subset.

The description of a group or class of materials as suitable for a given purpose in connection with one or more embodiments implies that mixtures of any two or more of the members of the group or class are suitable. Description of constituents in chemical terms refers to the constituents at the time of addition to any combination specified in the description and does not necessarily preclude chemical interactions among constituents of the mixture once mixed. First definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, *etc.* As such, to the extent any embodiments are described as less desirable than other embodiments or prior art implementations with respect to one or more characteristics, these embodiments are not outside the scope of the disclosure and can be desirable for particular applications.

## Claims

1. A method for training a target neural network using a foundation model having a source neural network that has been pre-trained to operate on a source modality, comprising:
inputting source data to the foundation model, the source neural network of the foundation model having at least one source encoder having one or more source weights which have been pre-trained to detect a source feature that is detectable within the source data of the source modality;
inputting target data to a target neural network operating on a target modality, the target neural network including at least one target encoder having one or more target weights for computing one or more target features within the target data of the target modality;
training the one or more target weights by pairing the target data with the source data and freezing the one or more source weights of the source neural network for a pre-determined epoch; and
wherein the source neural network is pre-trained for operating on the source modality using the source data to detect one or more objects.

2. The method of claim 1, wherein the target data comprises radar data received from a radar sensor.

3. The method of claim 2, wherein the step of pairing the target data with the source data further comprising: pairing the image data and the radar data.

4. The method of claim 3, wherein the radar data is spectral radar data.

5. The method of claim 1, wherein the target data comprises Lidar data from a Lidar sensor.

6. The method of claim 4, wherein the target neural network is a transformer based neural network.

7. The method of claim 6, wherein the target neural network is a convolutional neural network.

8. The method of claim 2, wherein the radar data is radar point cloud data.

9. The method of claim 8, wherein the target modality is operable to detect several objects within an input frame of the target data.

10. The method of claim 2, wherein the at least one source encoder includes an image encoder and a text encoder, the at least one target encoder includes a radar encoder, and training the target weight further comprises: training only the target weight of the radar encoder during the pre-determined epoch, training a first source weight of the image encoder and the target weight of the radar encoder after the pre-determined epoch.

11. The method of claim 10 further comprising, freezing a second source weight of the text encoder after the pre-determined epoch.

12. The method of claim 2, wherein the at least one source encoder includes an image encoder and a text encoder, the at least one target encoder includes a radar encoder, and training the target weight further comprises: training only the target weight of the radar encoder during the pre-determined epoch, training a first source weight of the image encoder, a second source weight of the text encoder, and the target weight of the image encoder after the pre-determined epoch.

13. The method of claim 1, further comprising: learning a feature embedding of the foundation model; and classifying the object using the target data, wherein the object is classified according to a multiclass classification.

14. The method of claim 13, further comprising: generating a new classification for the object within the multiclass classification using a text embedding corresponding to one or more hierarchy levels within the multiclass classification.

15. The method of claim 1 further comprising: generating one or more feature embeddings from the source encoder and the target encoder for one or more objects detected within the source data and the target data; and generating one or more regression parameters for a predicted bounding boxes for the one or more objects detected.

16. The method of claim 15, wherein a loss value for the one or more feature embeddings and the one or more regression parameters is combined using a bipartite matching loss function.

17. The method of claim 15, wherein a loss value for the one or more regression parameters of the predicted bounding boxes is computed as an Lₚ norm.

18. The method of claim 15, wherein a loss value is computed using a mean square error loss function or a cosine-similarity loss function.

19. A system for training a target neural network using a foundation model having a source neural network that has been pre-trained to operate on a source modality, comprising:
a target sensor system that generates target data relating to a target modality;
memory operable to store the source neural network associated with the foundation model;
a processor configured to:
receive source data for the source neural network of the foundation model, wherein the source neural network includes at least one source encoder having one or more source weights which have been pre-trained to detect one or more source features that is computable within the source data of the source modality;
receive the target data for a target neural network, wherein the target neural network includes at least one target encoder having one or more target weights for detecting a target feature within the target data of the target modality; and
train the one or more target weights by pairing the target data with the source data and freezing the one or more source weights of the source neural network for a pre-determined epoch.

20. A method for training a target neural network using a foundation model having a source neural network that has been pre-trained to operate on a source modality, comprising:
inputting source data to the foundation model, the source neural network of the foundation model having at least one source encoder having one or more source weights which has been pre-trained to detect one or more source features that is detectable within the source data of the source modality;
inputting target data to a target neural network operating on a target modality, the target neural network including at least one target encoder having a target weight for detecting a target feature within the target data of the target modality;
training the target weight by pairing the target data with the source data and freezing the source weight of the source neural network for a pre-determined epoch;
generating one or more feature embeddings from the source encoder and the target encoder for one or more objects detected within the source data and the target data; and
generating one or more regression parameters for predicted bounding boxes for the object detected.
